# FASCICULE DE BREVET EUROPEEN

(11) **EP 1 211 387 B1**
(45) Date de publication et mention de la délivrance du brevet: **15.03.2006**
(21) Numéro de dépôt: 01403057.1
(22) Date de dépôt: 29.11.2001
(51) Int. Cl.: F01D 25/24

(54) **Virole interne de stator**
Innenring eines Stators
Internal stator shroud

(30) Priorité: 30.11.2000 FR 0015475
(43) Date de publication de la demande: 05.06.2002
(73) Titulaire: SNECMA, 75015 Paris (FR)
(72) Inventeur: Guerout, Philippe Roger Fernand, 77820 Le Chatelet en Brie (FR); Hupppe, Olivier Louis Fernand, 77176 Savigny Le Temple (FR); Lepretre, Gilles Gérard Claude, 91860 Epinay sous Senart (FR); Louaisil, Olivier Jean-Jacques, 77930 Perthes en Gatinais (FR); Niclot, Thierry Jean-Maurice, 91600 Savigny sur Orge (FR); Debeneix, Pierre Etienne Emmanuel, 77930 Saint Sauveur sur Ecole (FR)

(56) Documents cités:
- FR-A- 2 580 033
- GB-A- 856 599
- GB-A- 2 019 954
- US-A- 5 320 484
- US-A- 5 320 487
- US-A- 5 616 003

## Description

Le sujet de cette invention est une virole interne de stator.

La maîtrise des dilatations thermiques est devenue essentielle dans le domaine des turboréacteurs afin d'assurer un bon rendement par le réglage du jeu entre le stator et les bouts d'aubes mobiles du rotor. Une structure de stator qu'on rencontre fréquemment est double et comprend un carter entourant une virole interne en contact avec les gaz de propulsion de la machine. Il est alors usuel que le carter extérieur soit formé d'un seul tenant afin qu'il possède une bonne résistance mécanique et qu'il puisse être refroidi par ventilation avec une bonne régularité favorisée par sa continuité, mais que la virole soit au contraire composite, formée de circonférences successives d'éléments en secteur de cercle. Grâce à cette disposition, les contraintes internes qui auraient pu se développer dans la virole en raison du montage au carter plus rigide et de l'exposition aux gaz chauds de la veine restent à un niveau modéré, et les différentes circonférences peuvent être ventilées à des intensités différentes pour régler indépendamment leurs diamètres. L'art antérieur comprend un certain nombre d'illustrations de ce stator double, dont on peut citer les brevets français 2 683 851 et 2 695 164 délivrés à la demanderesse.

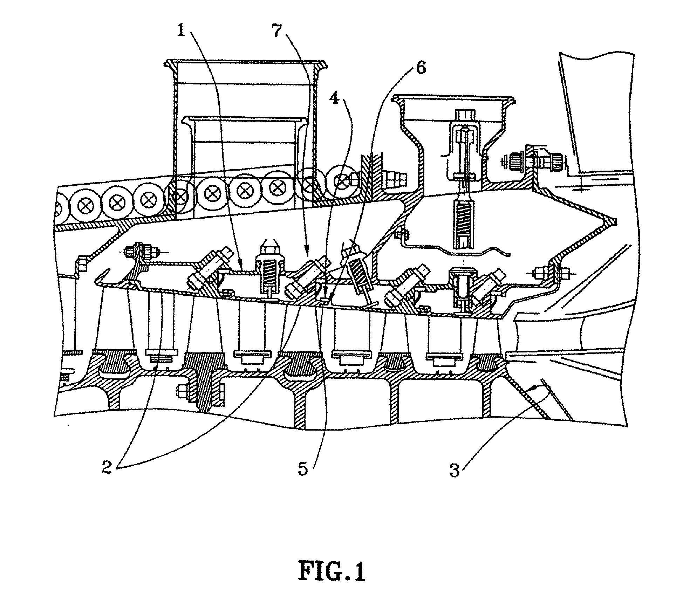

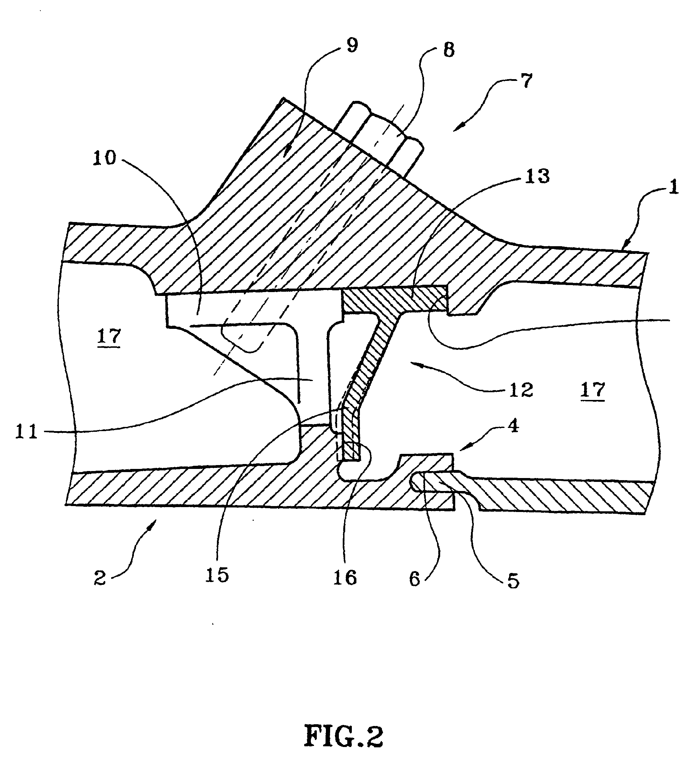

La figure 1 représente une de ces conceptions, où le carter externe porte la référence 1, les éléments de virole la référence 2 et le rotor la référence 3 ; les éléments de virole 2 sont assemblés aux éléments 2 adjacents, situés sur les circonférences voisines, par des assemblages 4 composés d'un tenon 5 sur un des éléments 2 et d'une rainure 6, dans laquelle pénètre le tenon 5, sur l'autre des éléments 2. Des points de fixation 7, mieux représentés à la figure 2, unissent les éléments de virole 2 au carter 1. Ils comprennent pour l'essentiel un boulon 8 engagé à travers un bossage 9 du carter 1 et une portée de contact 10 au carter 1, située au bout d'une nervure 11 de l'élément de virole 2. Un tel bossage 9 est connu du brevet US5320487. Les boulons. 8 sont disposés obliquement en général afin d'assurer le maintien axial et radial des secteurs de redresseurs (les éléments de virole 2). Des joints élastiques 12 circulaires sont disposés à l'arrière des circonférences d'éléments de virole 2 et comprennent un talon 13 serré entre la portée de contact 10 et un épaulement 14 du carter 1 et, s'élevant sous le talon 13, une lèvre d'étanchéité 15 dont l'extrémité s'appuie sur une face plane 16 d'étanchéité à l'arrière des éléments de virole 2. Ainsi, des chambres 17 individuelles sont isolées entre le carter 1 et chacune des circonférences d'éléments de virole 2.

L'objectif d'obtenir un bon réglage des diamètres des circonférences de virole n'est toutefois pas pleinement atteint, car des variations de diamètre et des ondulations des circonférences apparaissent facilement.

On attribue ici cet inconvénient à la présence des points de fixation 7, qui apparaissent comme des irrégularités de structure dans les éléments de virole 2. Plus exactement, les inventeurs ont considéré que la présence d'une pluralité de points de fixation 7 était nuisible et proposent de n'en employer qu'un seul par élément de virole 2 dans les solutions constitutives de l'invention.

Comme un point de fixation unique ne permettrait pas de retenir à lui seul un élément de virole 2 de façon satisfaisante, on préconise encore d'utiliser un ou deux points d'appui par élément de virole 2 à la place des points de fixation supprimés. Ces points d'appui comprennent un tenon fixé à l'élément de virole et pénétrant dans une rainure d'une bride associée, qui est fixé au carter. Les éléments de virole ont la faculté de se déplacer légèrement dans les directions axiale et de circonférence de la machine au point d'appui par un glissement des tenons dans les rainures, sans que des déplacements excessifs soient tolérés car des états de butée seraient atteints. On réussit alors à concilier un assemblage convenable des éléments de virole au carter et une souplesse de montage qui évite de les déformer de façon irrégulière.

Deux dispositions favorables peuvent principalement être envisagées. Dans la première, les points de fixation sont au centre des éléments de virole et les points d'appui sont au nombre de deux par élément de virole et situés à des extrémités opposées des éléments de virole.

Cette configuration présente l'avantage que la résultante des efforts aérodynamiques s'exerce souvent sur le point de fixation, ce qui évite d'engendrer un moment de flexion dans l'élément de virole autour de ce point de fixation.

La seconde configuration favorable est caractérisée par des points de fixation à des premières extrémités des éléments de virole et des points d'appui, au nombre d'un par élément de virole, situés à des secondes extrémités, opposées aux premières, de ces éléments. La structure de la virole, dont les éléments ne sont donc retenus qu'à leurs extrémités, devient alors particulièrement simple.

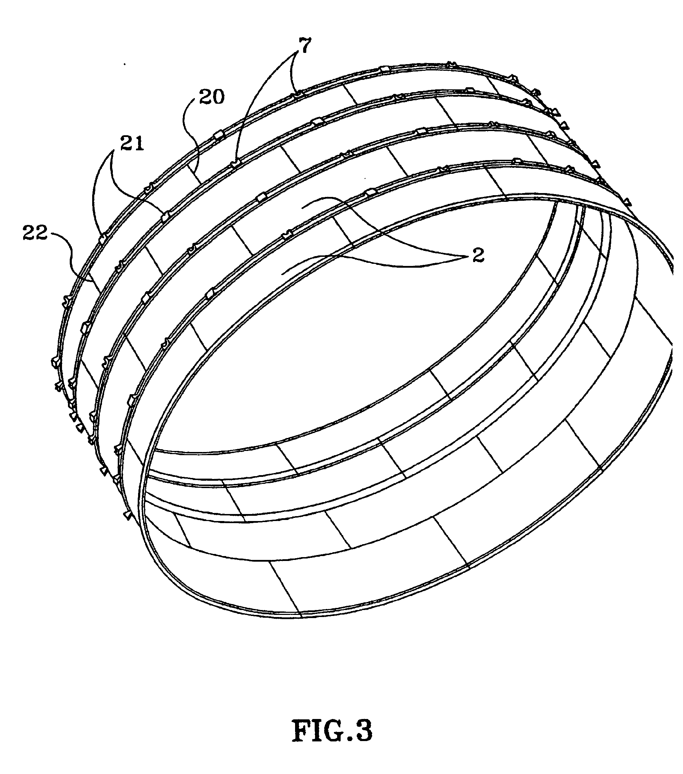

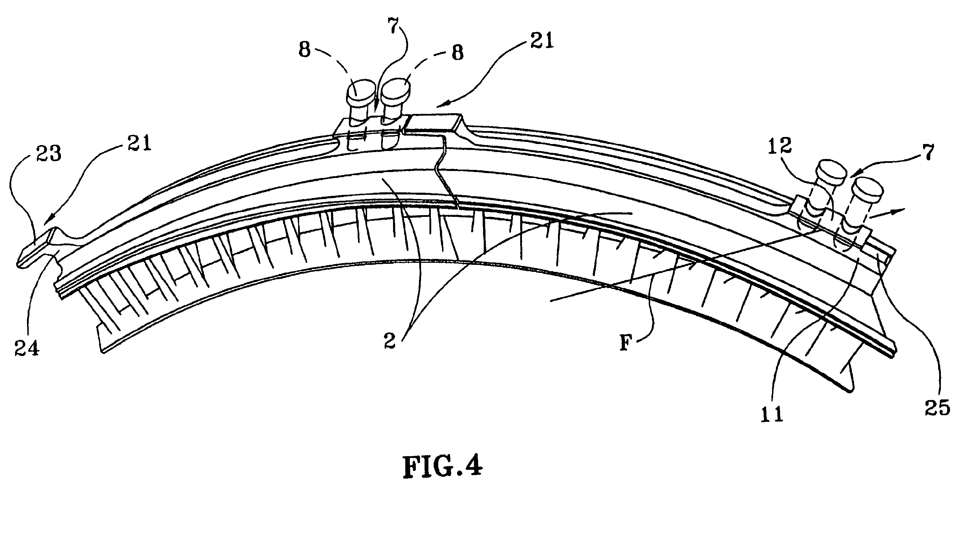

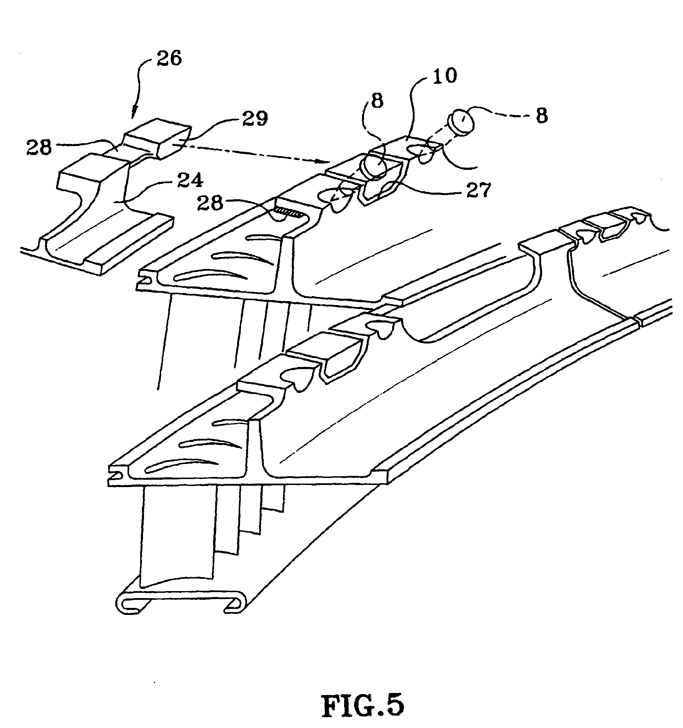

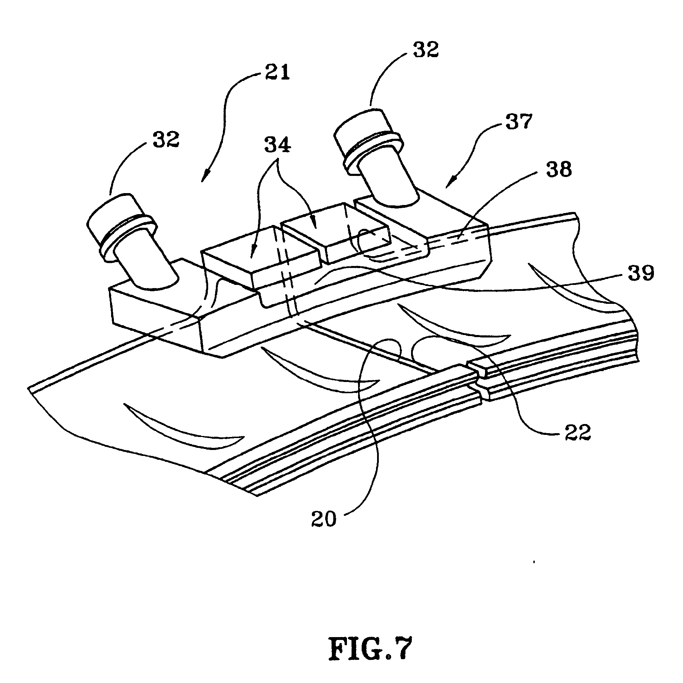

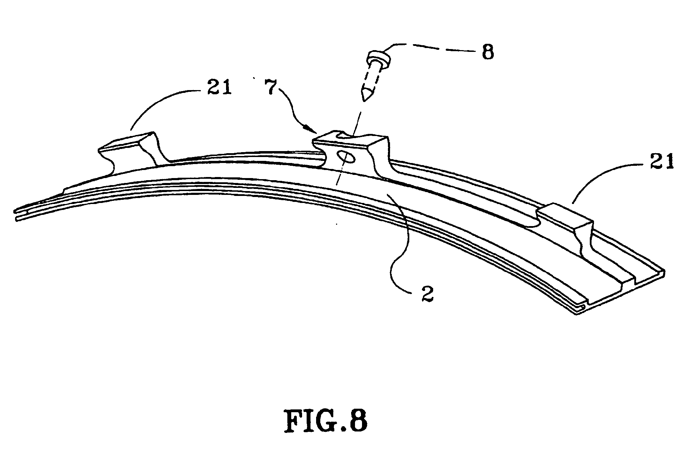

D'autres caractéristiques et avantages de l'invention seront maintenant décrits en référence aux figures suivantes :
■ la figure 1 déjà décrite illustre un stator composite,
■ la figure 2 déjà décrite illustre un point de fixation d'élément de virole à un carter,
■ et les autres figures 3 à 8 illustrent certaines réalisations de l'invention : la figure 3, une première réalisation ; la figure 4, un élément de virole de celle-ci ; les figures 5, 6 et 7, des détails essentiels de trois autres modes de réalisation ; et la figure 8, un élément de virole différent de celui de la figure 4 et compatible avec la figure 7.

De nombreux éléments de l'art antérieur déjà abordés à propos des figures 1 et 2 se retrouvent dans l'invention. Il s'agit notamment de la structure des points de fixation 7 et de la présence des éléments de raccordement 4 entre circonférences de virole et des joints élastiques 12 pour amortir les vibrations. Un aspect caractéristique de l'invention est que chaque élément de virole 2 n'est associé qu'à un seul point de fixation 7 qui est situé, dans la réalisation de la figure 3, près d'une extrémité latérale 20 (et non loin d'un bord axial de l'élément de virole 2). Un point d'appui 21 est également disposé sur chaque élément de virole 2 symétriquement au point de fixation 7, près du même bord axial et non loin de l'extrémité latérale opposée 22. Un enseignement notable de la figure 3 est aussi qu'il est avantageux que les éléments de virole 2 soient situés en quinconce, c'est-à-dire que leurs extrémités 20 ou 22 soient dans le prolongement de lignes médianes des éléments de virole 2 des circonférences adjacentes. Une meilleure cohésion dans la virole 2 est ainsi obtenue avec l'homogénéité de sa structure, dont la disposition permet d'obtenir un degré d'isostaticité satisfaisant à la fois à la nécessité d'avoir une structure rigide et à celle de la laisser se déformer dans certaines situations, surtout en se dilatant.

La figure 4 montre que les points d'appui 21 comprennent un tenon 23 situé au bout d'un manche 24 s'élevant de l'élément de virole 2. Ce tenon 23 repose sur la surface de fond d'une rainure 25 solidaire du carter 1. Dans cette réalisation où les points de fixation et d'appui 7 et 21 sont proches des extrémités latérales 20 et 22 des éléments de virole 2, ils sont adjacents à ceux des éléments de virole 2 voisin, de sorte que la rainure 25 peut ici être opérée dans la nervure 11 du point de fixation 7 de l'élément de virole 2 voisin. Le tenon 23 s'étend dans la direction tangentielle de la machine pour déborder de l'élément de virole 2 auquel il appartient sur l'élément suivant. On verra que d'autres configurations sont possibles, mais dans tous les cas les points d'appui 21 permettent des déplacements mutuels axiaux et circonférentiels modérés des éléments de virole 2 voisins.

Ici comme dans d'autres réalisations, les points de fixation 7 sont conçus avec deux boulons 8 parallèles, ce qui ne change rien à l'unicité du point de fixation 7 puisque ces boulons 8 sont rapprochés. La paire de boulons 8 permet d'obtenir une fixation plus sûre et parfois d'éliminer les moments fléchissants exercés par les forces aérodynamiques sur les éléments de virole 2 : si la résultante F de ces forces, ou sa projection en direction radiale, passe entre les boulons 8, la réaction s'exerce par des efforts comparables produits dans ceux-ci, sans que l'élément de virole 2 lui-même soit soumis à une flexion notable.

Dans une variante de réalisation illustrée à la figure 5, le tenon des points de fixation est de terme plus compliquée et porte la référence 26 ; il s'engage dans une rainure 27 opérée entre les emplacements des boulons 8 et comprend alors successivement, après le manche 24, une tablette 28 glissée sous le talon 10 du point de fixation 7 et une extrémité 29 plus massive et notamment plus large, pour saillir axialement et s'étendre entre les deux portions du talon 10 jusque dans la rainure 27, qui est opérée dans la nervure 11. Ici, la portion essentielle du tenon 26 a une extension axiale plutôt que tangentielle, ce qui ne modifie rien aux conditions d'appui.

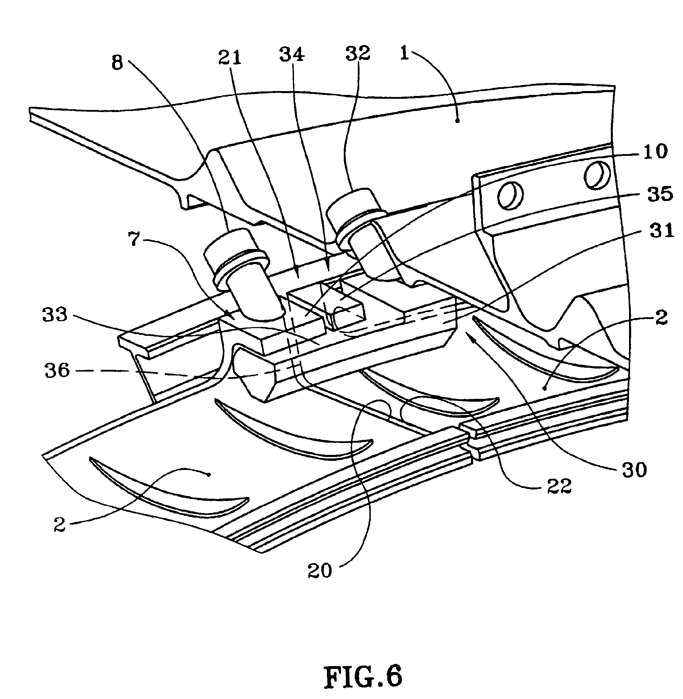

Dans d'autres modes de réalisation, les brides sur lesquelles les encoches sont établies n'appartiennent pas aux points de fixation 7 mais à des pièces autonomes. C'est ce qu'on illustre à la figure 6, où les points de fixation 7, qui ne comprennent ici qu'un seul boulon 8 mais restent situés près de l'extrémité latérale 20, ne possèdent plus de rainure 25 ni 27 : on dispose alors une bride 30, composée d'une barrette 31 unie au carter 1 par un boulon 32 semblable et parallèle au boulon 8 et creusée d'une rainure 33, à proximité du point de fixation 7 de manière que le talon 10 surplombe le bout de la barrette 31 et ferme la rainure 33. Le point d'appui 21 de l'élément de virole 2 comprend encore un tenon 34 à extrémité 35 saillant axialement dans la rainure 33 pour établir la liaison souhaitée. L'extrémité 35 est liée au corps principal de l'élément de virole 2 voisin de celui qui porte le point de fixation 7 par un manche 36 adjacent à l'extrémité latérale 22 et de direction radiale.

La bride autonome peut prendre d'autres formes. L'une d'elles est représentée à la figure 7, où la bride 37 comprend une barrette 38 au milieu de laquelle la rainure 39 a été établie et dont les deux extrémités sont reliées au carter 1 par une paire de boulons 32. Dans cette conception, les points de fixation 7 et d'appui 21 sont entièrement séparés ; la bride 37 est même commune à une paire de tenons 34 semblable à la précédente mais appartenant à des extrémités adjacentes 20 et 22 de deux éléments de virole 2 voisins. La figure 8 illustre de tels éléments, qui comprennent une paire de points d'appui 21 aux extrémités et un point de fixation 7 central, pouvant comprendre ici encore un ou deux boulons de fixation 8. L'emploi d'une paire de points d'appui 21 combinés à un point de fixation 7 permet d'ajuster la courbure de l'élément de virole 2 à celle du carter 1 et d'établir éventuellement une précontrainte qui empêche l'élément de virole 2 de vibrer. Il n'est évidemment pas nécessaire que les tenons 34 soient associés à la même bride 37 et partagent la même rainure 39.

Le point de fixation 7 peut être décalé du centre comme des extrémités, surtout si on cherche à le placer dans l'alignement de la résultante des forces aérodynamiques comme on l'a signalé plus haut. De même, les points d'appui 21 ne sont pas obligatoirement contre les extrémités des éléments de virole 2, mais peuvent être près d'elles.

## Revendications

1. Assemblage comportant un carter externe (1) et une virole interne de stator composée d'éléments de virole (2) en forme de secteurs de cercle joints en circonférences successives et assemblés à ce carter externe (1) par un point de fixation unique par élément de virole, et un point d'appui (21) par élément de virole, comprenant un tenon (23, 26, 34) fixé à l'élément de virole et pénétrant dans une rainure (25, 27, 33, 39) d'une bride associée fixée au carter, **caractérisé en ce que** les points de fixation sont à des premières extrémités des éléments de virole, et les points d'appui sont au nombre d'un par élément de virole et situés à des secondes extrémités (22), opposées aux premières (20), des éléments de virole (2).

2. Assemblage suivant la revendication 1, **caractérisé en ce que** les brides (10, 11) sont formées, pour chacun des tenons, dans le point de fixation d'un élément de virole adjacent à l'élément de virole portant ledit tenon.

3. Assemblage suivant la revendication 1, **caractérisé en ce que** les brides (30, 37) sont autonomes et assemblées au carter externe par des moyens de fixation (32).

4. Assemblage suivant la revendication 3, **caractérisé en ce que** les points de fixation (7) sont disposés de façon à fermer une extrémité des rainures (33).

5. Assemblage suivant la revendication 3, **caractérisé en ce que** les points de fixation comprennent une paire de boulons (8) de fixation parallèles entre le carter externe et l'élément de virole, et **en ce que** les rainures (27) s'étendent entre les boulons (8) des paires.

6. Assemblage suivant la revendication 5, **caractérisé en ce que** le point de fixation est placé sur chaque élément dé virole de façon qu'une force résultante (F) d'efforts aérodynamiques sur ledit élément passe entre les boulons du point de fixation.

7. Assemblage suivant l'une quelconque des revendications précédentes, **caractérisé en ce que** les éléments de virole sont assemblés d'une circonférence à une circonférence suivante en quinconce.

8. Turboréacteur comportant un assemblage selon l'une quelconque des revendications précédentes.

## Patentansprüche

1. Anordnung, umfassend: ein externes Gehäuse (1) und eine interne Stator-Spannvorrichtung, welche aus Kreissektor-förmigen Spannvorrichtungs-Elementen (2) zusammengesetzt ist, welche an aufeinander folgenden Umfängen verbunden sind, und welche an dem externen Gehäuse (1) mittels eines einzelnen Fixier-Punktes pro Spannvorrichtungs-Element montiert sind, und einen Abstütz-Punkt (21) pro Spannvorrichtungs-Element, welcher einen Zapfen (23, 26, 34) umfasst, welcher an dem Spannvorrichtungs-Element fixiert ist, und in eine Rille (25, 27, 33, 39) eines zugehörigen, am Gehäuse fixierten, Flansches eindringt, **dadurch gekennzeichnet, dass** sich die Fixier-Punkte an ersten Enden der Spannvorrichtungs-Elemente befinden, und dass die Abstütz-Punkte die Anzahl von eins pro Spannvorrichtungs-Element aufweisen, und an zu den ersten (20) entgegengesetzten zweiten Enden (22) der Spannvorrichtungs-Elemente (2) angeordnet sind.

2. Anordnung gemäß Anspruch 1, **dadurch gekennzeichnet, dass** die Flansche (10, 11) für jeden der Zapfen, am Fixier-Punkt eines Spannvorrichtungs-Elementes, welches zu dem diesen Zapfen tragenden Spannvorrichtungs-Element benachbart ist, ausgebildet sind.

3. Anordnung gemäß Anspruch 1, **dadurch gekennzeichnet, dass** die Flansche (30, 37) autonom sind, und an dem externen Gehäuse mittels Fixier-Mitteln (32) montiert sind.

4. Anordnung gemäß Anspruch 3, **dadurch gekennzeichnet, dass** die Fixier-Punkte (7) zum Schließen eines Endes der Rillen (33) angeordnet sind.

5. Anordnung gemäß Anspruch 3, **dadurch gekennzeichnet, dass** die Fixier-Punkte zwischen dem externen Gehäuse und dem Spannvorrichtungs-Element ein Paar paralleler Fixier-Bolzen (8) umfassen, und **dadurch**, dass die Rillen (27) sich zwischen den Bolzen (8) der Paare erstrecken.

6. Anordnung gemäß Anspruch 5, **dadurch gekennzeichnet, dass** der Fixier-Punkt an jedem Spannvorrichtungs-Element derart angeordnet ist, dass eine Resultat-Kraft (F) von auf dieses Element einwirkenden aerodynamischen Kräften zwischen den Bolzen des Fixier-Punktes hindurchgeht.

7. Anordnung gemäß einem der vorhergehenden Ansprüche, **dadurch gekennzeichnet, dass** die Spannvorrichtungs-Elemente von einem Umfang zum einem folgenden Umfang gemäß einer versetzten Anordnung angeordnet sind.

8. Strahlturbine, welche eine Anordnung gemäß einem der vorhergehenden Ansprüche umfasst.

## Claims

1. Assembly comprising an external housing (1) and an internal stator shroud composed of shroud elements (2) in the form of circle sectors joined at successive circumferences and assembled with this external housing (1) by a single fastening point per shroud element, and a bearing point (21) per shroud element, comprising a tenon (23, 26, 34) fastened to the shroud element and entering a groove (25, 27, 33, 39) in an associated flange fastened to the housing, **characterized in, that** the fastening points are at first ends of the shroud elements, and the bearing points number one per shroud element and are situated at second ends (22), opposite the first ends (20), of the shroud elements (2).

2. Assembly according to Claim 1, **characterized in that** the flanges (10, 11) are formed, in the case of each of the tenons, in the fastening point of a shroud element adjacent to the shroud element bearing the said tenon.

3. Assembly according to Claim 1, **characterized in that** the flanges (30, 37) are independent and assembled with the external housing by fastening means (32).

4. Assembly according to Claim 3, **characterized in that** the fastening points (7) are arranged in such a way as to close one end of the grooves (33).

5. Assembly according to Claim 3, **characterized in that** the fastening points comprise a pair of parallel fastening bolts (8) between the external housing and the shroud element, and **in that** the grooves (27) extend between the bolts (8) of the pairs.

6. Assembly according to Claim 5, **characterized in that** the fastening point is placed on each shroud element in such a way that a resultant force (F) of aerodynamic stresses on the said element passes between the bolts of the fastening point.

7. Assembly according to any one of the preceding claims, **characterized in that** the shroud elements are assembled from one circumference to a following circumference in staggered formation.

8. Turbojet comprising an assembly according to any one of the preceding claims.
